Europäisches Patentamt

European Patent Office

Office européen des brevets

(11) Publication number: **0 094 204**
**B1**

## EUROPEAN PATENT SPECIFICATION

(45) Date of publication of patent specification: **20.07.88**

(51) Int. Cl.⁴: **F 21 S 11/00,** F 21 V 17/00

(21) Application number: **83302527.3**

(22) Date of filing: **05.05.83**

(54) Sunbeam concentrating and collecting apparatus.

(30) Priority: **06.05.82 JP 75877/82**

(43) Date of publication of application:
**16.11.83 Bulletin 83/46**

(45) Publication of the grant of the patent:
**20.07.88 Bulletin 88/29**

(84) Designated Contracting States:
**CH DE FR GB IT LI SE**

(56) References cited:
**GB-A- 697 728**
**US-A-1 652 347**
**US-A-2 859 334**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Neill, Alastair William et al**
**Appleyard Lees & Co. 15 Clare Road**
**Halifax West Yorkshire HX1 2HY (GB)**

Courier Press, Leamington Spa, England.

## Description

The present invention relates to a sunbeam concentrating and collecting apparatus. In more detail, the present invention relates to a sunbeam concentrating and collecting apparatus of any desired capacity and having a structure suitable for a mass-production process utilising several kinds of standardised common material members.

The inventor of the present invention has invented a sunbeam collecting and transmitting apparatus for use in a variety of application fields having such a structure that sunbeams are concentrated through a Fresnel lens and the concentrated sunbeams are transmitted to a desired location through a light conductor cable. The apparatus developed by the same inventor has been of rather restricted capacity but recent increase in demand calls for further improvement thereof with a view to easily realising low cost apparatus having diversified capacities.

GB—A—697 728 discloses a light fitting comprising a regular polygonal frame comprising a plurality of angled frame segments joined together to form the frame. However such a frame is not suitable for use as a sunbeam concentrating and collecting apparatus, and in particular, the known frame does not have any effective means for supporting a lens on the frame in an adjustable manner.

The invention overcomes this problem by providing adjustable means disposed in the included angles of the frame for supporting at least one lens along one end plane of the frame, the adjustable supporting means comprising a threaded shaft threadedly supported by one of the frame segments and engaging means supported at the upper end of the shaft and adapted to fixedly receive said at least one lens thereon, the engaging means comprising a seat nut threadedly affixed to the upper end of said shaft, an upper nut to which said at least one lens is affixed, and a swivel member joining said upper nut to said seat nut by means of a ball and socket.

Advantageous embodiments of the invention are contained in the dependent Claims 2 to 6.

By way of example, specific embodiments of the invention will now be described, with reference to the accompanying drawings, in which:—

Figure 1 is an elevational view of an embodiment of frame of a sunbeam concentrating and collecting apparatus to which the present invention is applied;

Figures 2(a) to 2(c) are outline structural views of respective frame pieces which form the holding frame illustrated in Figure 1;

Figures 3(a) and 3(b) are enlarged perspective views of structures of frame pieces illustrated in Figures 2(a) to 2(c);

Figure 4 is an outline longitudinal sectional view of an adjustable supporting means;

Figure 5 is an enlarged sectional view of a part of the adjustable supporting means illustrated in Figure 4;

Figure 6 is a plan view taken along the line VI—VI of Figure 5; and

Figure 7 is a plan view of an aggregate of lenses arranged along the plane of the holding frame illustrated in Figure 1.

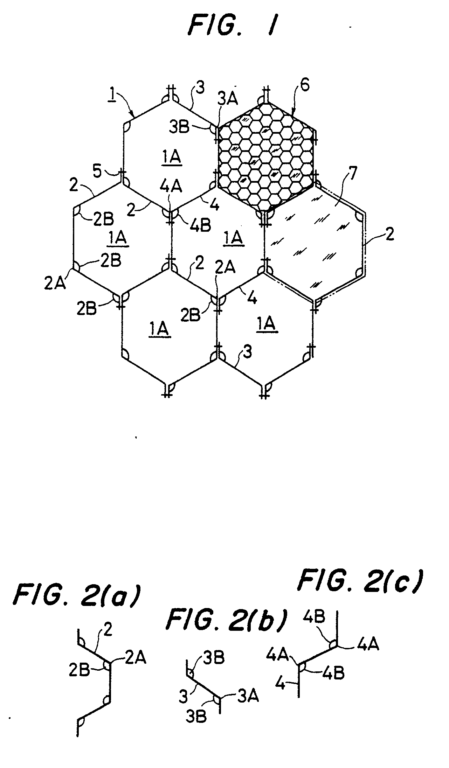

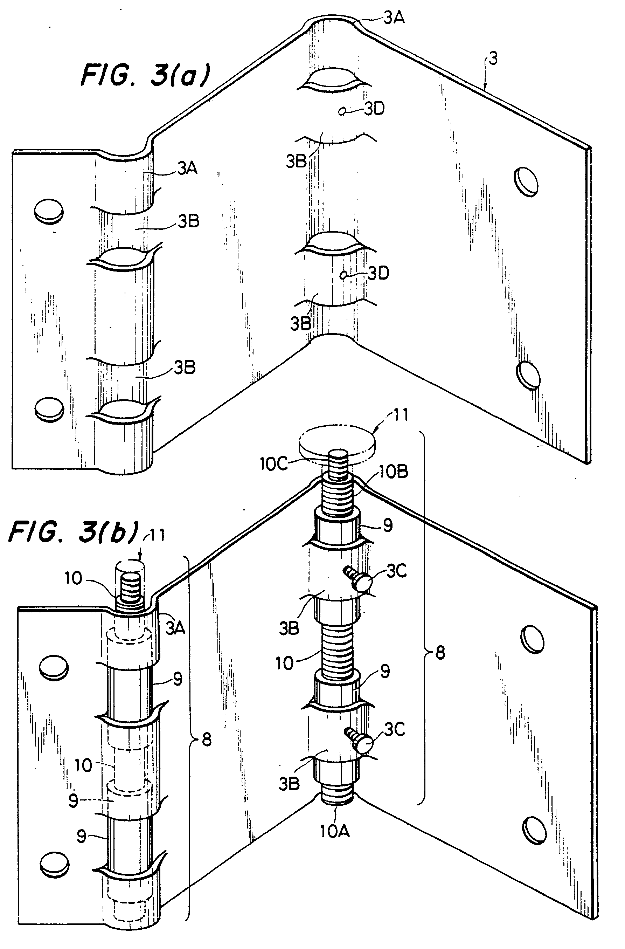

Figure 1 is an elevational view of an embodiment of holding frame of a sunbeam concentrating and collecting apparatus to which the present invention is applied. The frame 1 is configured in a honeycomb-shape by integrating a plurality of unit frame 1A having a regular hexagonal plane shape each of which is considered as the minimum unit. Said holding frame 1 is formed by respectively coupling three kinds of frame pieces 2 to 4 shown in (a) to (c) of Figure 2 with bolts 5. When the holding frame 1 is once formed, an aggregate of hexagonal lenses 6 or a single hexagonal lens 7 is disposed at the end plane of each unit frame 1A, and said aggregate of lenses 6 or single lens 7 is supported by the adjustable supporting means 8 (refer to Figure 3 and successive Figures) connected to the holding frame 1.

In this embodiment, the frame pieces 2 to 4 which form said holding frame 1 are respectively configured as plate pieces and each of said pieces 2 to 4 is provided with at least one or more angled portions 2A to 4A, each of which forms a crest portion of the unit frame 1A and moreover the inside of said angled portion is provided with grooves forming supporting portions 2B to 4B which are formed by partly protruding said frame piece.

Figure 3(a), (b) illustrate a single frame piece 3, the other frame pieces 2 and 4 being formed with a generally similar structure. As shown in the same Figures, the frame piece 3 provides the supporting portion 3B which is formed in the inside of said angled portion 3A by partly protruding said frame piece in the form of groove and said supporting portion 3B supports, as shown in Figure 1, the adjustable supporting means 8 which holds a hexagonal single lens 7 or aggregate of lenses 6. Meanwhile, this adjustable supporting means 8 is composed of, as shown in Figure 3 to Figure 4, a cylinder 9 which is engaged with said supporting means 3B and is fixed therein, a bolt shaft 10 which is inserted into said cylinder 9 and is supported in such a manner as to be capable of rotating and moving in the axial direction, and an engaging portion 11 which is attached at the top of bolt shaft 10 and is engaged with the lens.

Said cylinder 9 has a smooth outer surface but a female-threaded inner surface and is longer in the axial direction than said supporting means 3B. In addition, said cylinder 9 is fitted into said supporting means 3B until one half of its outer wall is placed in contact with the inner wall of said supporting means 3B while the other half of its outer wall is in contact with the inner wall of the angled portion 3A of the frame piece 3. Thus, said cylinder is held by said frame piece 3 in such a manner that it is sandwiched between both portions. In order to more securely fix said cylinder 9 to said frame piece 3, said supporting means 3B is further provided with a screw hole 3D for permitting the screwing of a set-screw 3C through said supporting means so that said cylinder 9 can be perfectly settled to said frame piece 3 with the set-screw 3C screwed into said screw hole 3D.

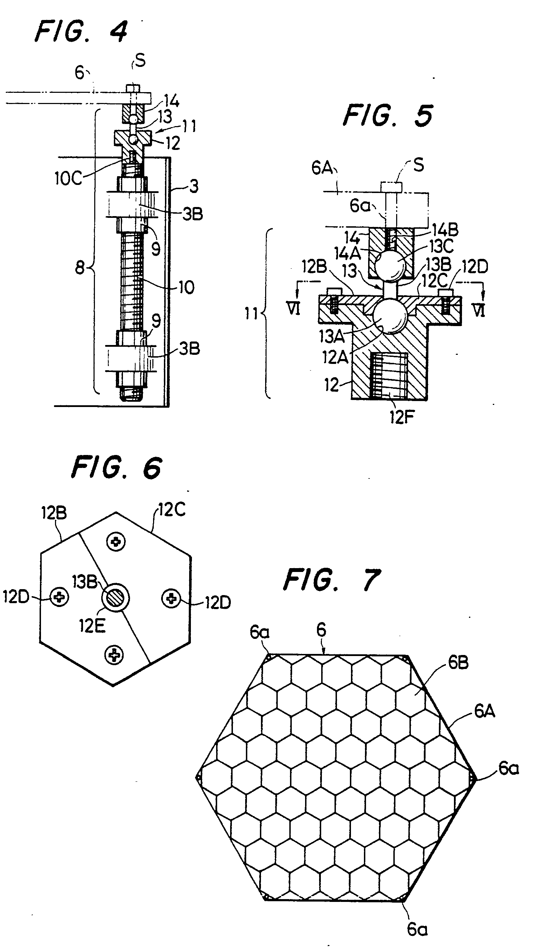

The bolt shaft 10 is provided with a groove (not illustrated) at its bottom end 10A for engagement with a screw driver and also with a stepped portion 10B and a screwed small-diametered portion 10C at the top end portion. This screwed small-diametered portion 19C is provided with an engaging portion 11 as shown in Figure 4 and Figure 5, and thereby a single lens 7 or aggregate of lenses 6 is held on the bolt shaft 10 via said engaging portion 11.

As shown in Figure 4 to Figure 6, said engaging portion 11 comprises a seat nut 12 which is mounted on the screwed small-diametered portion 10C of the bolt shaft 10. A pivot 13 is supported in such a manner as to be movable in various directions so that an upper nut 14 which is supported on said pivot 11 is capable of shifting relative to the nut 12. The seat nut 12 provides at its upper surface a half-spherical concave space 12A in order to accommodate therein a spherical portion 13A at the lower end of said pivot 13 and also provides a two-part cover 12B and 12C in order to clamp said spherical portion as illustrated in Figure 6. The cover is composed of a pair of half portions 12B and 12C, and each half portion is so constructed that it is settled on to the nut seat 12 by set screws 12D and provides a hole 12E at the centre in order to allow the shaft 13B of the pivot to pass therethrough. Said seat nut 12 is also provided at its bottom portion with a screw hole 12F which engages with the screwed small-diametered portion 10C of the bolt shaft 10, making it possible to fix said seat nut 12 on the bolt shaft 10.

The upper nut 14 is provided with a spherical concave space 14A for engagement with an upper spherical portion 13C of the pivot 13 and also provides a screw hole 14B opening to said spherical space 14A from the upper surface of said upper nut 14. This screw hole 14B is connected to a hole 6a bored in the aggregate of lenses 6 or lens 7. Thus, a set-screw S can be inserted through said screw hole 14B and the hole 6a in order to prevent relative motion (shear) being generated between the upper nut 14 and the spherical portion 13C of pivot.

If an aggregate of lenses 6 as illustrated in Figure 1 is fixed on the upper nut 14, such aggregate of lenses 6 can be formed as follows. Namely, an aggregate of lenses 6 is composed of, as shown in Figure 7, a hexagonal lens supporting plate 6A and plurality of hexagonal small-size lenses 6B arranged close to each other on said lens supporting plate 6A as shown in the same Figure. Said hole 6a is bored through the area in the vicinity of each crest portion of the lens supporting plate 6A and thereby said set-screw S can be screwed into the screw hole 14B of the upper nut 14 from the upper portion of the lens supporting plate 6A.

Explained hereunder is the assembling procedure of the sunbeam concentrating and collecting apparatus having the aforementioned structure to which the present invention is applied.

If an aggregate of lenses 6 is used in place of a single lens 7 as the lens system to be arranged along the end plane of the unit frame 1A, an aggregate of lenses 6 must be manufactured simultaneously or prior to manufacture of the holding frame 1.

On the other hand, the holding frame 1 can be assembled by mutually coupling together appropriate frame pieces 2 to 4 with the bolts 5 but it is desirable in this case that the adjustable supporting means 8 is mounted on the supporting portions 2B to 4B after the frame pieces 2 to 4 are assembled and any procedure other than mutually coupling the frame pieces 2 to 4 with the bolts 5 is no longer required on the occasion of assembling the holding frame 1. The adjustable supporting means 8 can, of course, be attached to the frame pieces 2 to 4 by screwing the bolt shaft 10 into the cylinder 9 after inserting and fixing the cylinder into the supporting portions 2B to 4B of frame pieces 2 to 4, but it is also possible to attach the cylinder 9 to the supporting portions 2B to 4B of the frame pieces 2 to 4 after the cylinder 9 has been engaged previously with the bolt shaft 10.

The engaging portion 11 mounted on top of the bolt shaft 10 is screwed into the bolt shaft 10 after the bolt shaft 10 is screwed into the cylinder 9 but it may be mounted on top of the bolt shaft 10 after assembling the holding frame 1.

When the frame 1 is assembled and the adjustable supporting means 8 is mounted to the frame 1, an aggregate of lenses 6 or single lens 7 is fixed on the upper nut 14 (with any desired method such as screwing, bonding, caulking, and pin coupling etc.). After a single lens 7 or aggregate of lenses 6 is placed on the adjustable supporting means 8, an inclination of the lens surface can be adjusted by placing the end of a screw-driver in the groove at the bottom end 10A of the bolt shaft 10 and by rotating it so that it moves in the axial direction. On this occasion, since a reasonable amount of relative sliding is allowed between the upper nut 14 and the seat nut 12 at both the upper and lower ends of pivot 13, if the height of crest points of said lens 7 or aggregate of lenses 6 is mutually different, there is no question of generating mechanical residual stress between said lens 7 or aggregate of lenses 6 and the engaging portion. Under the above-mentioned condition that the desired facilities are provided so that relative motion between the aggregate of lenses 6 and the engaging portion 11 is not generated, after the inclination of the lens surface is once adjusted, said pivot 13 and the engaging portion 14 are rigidly coupled by screwing the set-screw S into the screw hole 14B of the upper nut 14 via the hole 6a from upper portion of the lens supporting plater 6A thus pressing the end point of said set-screw S on to the upper spherical portion 13C of pivot 13. Alternatively, a bonding agent may be fed into the hole 12E between the covers 12B and 12C of the seat nut 12 and when it has hardened, the pivot 13 and the seat nut 12 are effectively integral and do not permit relative motion between the pivot 13 and seat nut 12. Furthermore, a nut may be applied to the bottom end of bolt shaft 10 while it is held so that it can no longer rotate and then said nut is screwed up against the end surface of supporting portion 3B of the frame piece 3 to lock the bolt shaft 10 in its position.

In the case of assembling a comparatively small-scale sunbeam concentrating and collecting apparatus, a desired one can be obtained with only a single unit frame 1A as the holding frame 1 but if a large-scale one is required, such apparatus can also be obtained utilising a plurality of unit frames 1A as the holding frame 1. In the latter case, particularly, the present invention assures comparatively low-cost manufacturing of an apparatus even if it is a large-scale one, and also realises not only mass-production of limited types but also mass-production of diversified types, because the holding frames in various sizes can be assembled only by coupling mutually the aforementioned three kinds of frame pieces 2 to 4.

As will readily be understood from the foregoing description, according to the present invention, the sunbeam concentrating and collecting apparatus in desired sizes can be manufactured easily and moreover economically.

In the above preferred embodiment, the supporting portions of the adjustable supporting means are provided only at the inner side of each angled portion of the frame piece in the above embodiment, but it is possible to provide said supporting portions at the outer side of each angled portion. Further, said supporting portions can be configured in the form of tongue pieces (namely projected pieces) having a through hole, instead of a groove as in the given embodiment. Each frame piece 2 to 4 can also be formed as a rod type frame piece instead of the plate type.

## Claims

1. A sunbeam concentrating and collecting apparatus comprising at least one regular polygonal holding frame (1A) comprising a plurality of angled frame segments (2, 3, 4) joined together to form said holding frame, and at least one lens device (6, 7), characterised in that adjustable means (8) are disposed in the included angles (2A, 3A, 4A) of the frame (1A) for supporting at least one said lens along one end plane of the frame (1A), the adjustable supporting means (8) comprising a threaded shaft (10) threadedly supported by one of the frame segments (2, 3, 4) and engaging means (11) supported at the upper end of the shaft and adapted to fixedly receive said at least one lens thereon, the engaging means (11) comprising a seat nut (12) threadedly affixed to the upper end of said shaft, an upper nut (14) to which said at least one lens is affixed, and a swivel member (13B) joining said upper nut to said seat nut by means of a ball and socket (12A, 13A, 14A, 13C).

2. A sunbeam concentrating and collecting apparatus, comprising a plurality of devices as claimed in claim 1, arranged in a planar array (1).

3. A sunbeam concentrating and collecting apparatus as claimed in claim 2, in which the planar array (1) is in a regular polygonal shape.

4. A sunbeam concentrating and collecting apparatus as claimed in claim 2, wherein said planar array (1) is in a honeycomb shape.

5. A sunbeam concentrating and collecting apparatus as claimed in claim 4, wherein each of said devices is hexagonal in shape.

6. A sunbeam concentrating and collecting apparatus as claimed in any one of the preceding claims, in which the shaft has a threaded stepped portion (10B, 10C) at the upper end thereof to which the seat nut is affixed.

## Patentansprüche

1. Vorrichtung zum Konzentrieren und Sammeln von Sonnenstrahlung, umfassend mindestens einen regelmäßigen polygonalen Halterahmen (1A), der eine Vielzahl von Winkelrahmensegmenten (2, 3, 4) aufweist, die zur Bildung des Halterahmens miteinander verbunden sind, und mindestens eine Linsenanordnung (6, 7), dadurch gekennzeichnet, daß eine Einstelleinrichtung (8) in den eingeschlossenen Winkeln (2A, 3A, 4A) des Rahmens (1A) angeordnet ist, um mindestens eine der Linsen in einer Stirnebene des Rahmens (1A) zu haltern, daß die einstellbare Halteeinrichtung (8) eine Gewindeachse (10), die von einem der Rahmensegmente (2, 3, 4) mit einem Gewinde gelagert ist, und eine Eingriffseinrichtung (11) aufweist, die vom oberen Ende der Achse getragen und so ausgelegt ist, daß sie zumindest die eine Linse darauf fest aufnimmt, und daß die Eingriffseinrichtung (11) eine Befestigungsmutter (12), die in Gewindeeingriff am oberen Ende der Achse befestigt ist, eine obere Mutter (14), an der zumindest die eine Linse befestigt ist, und ein Drehgelenk (13B) aufweist, welches die obere Mutter mit der Befestigungsmutter über eine Kugelzapfenanordnung (12A, 13A, 14A, 13C) verbindet.

2. Vorrichtung zum Konzentrieren und Sammeln von Sonnenstrahlung, umfassend eine Vielzahl von Einrichtungen nach Anspruch 1, die in einer ebenen Anordnung (1) angeordnet sind.

3. Vorrichtung zum Konzentrieren und Sammeln von Sonnenstrahlung nach Anspruch 2, wobei die ebene Anordnung eine regelmäßige polygonale Form hat.

4. Vorrichtung zum Konzentrieren und Sammeln von Sonnenstrahlung nach Anspruch 2, wobei die ebene Anordnung eine wabenförmige Gestalt hat.

5. Vorrichtung zum Konzentrieren und Sammeln von Sonnenstrahlung nach Anspruch 4, wobei jede der Einrichtungen eine sechseckige Form hat.

6. Vorrichtung zum Konzentrieren und Sammeln von Sonnenstrahlung nach einem der vorhergehenden Ansprüche, wobei die Achse einen Stufengewindebereich (10B, 10C) an ihrem oberen Ende aufweist, an dem die Befestigungsmutter befestigt ist.

## Revendications

1. Dispositif pour concentrer et recueillir les rayons solaires comprenant au moins un châssis de retenue (1A) en forme de polygone régulier comportant plusieurs éléments à profil en zigzag (2, 3, 4) assemblés pour former ledit châssirs de retenue et au moins une lentille (6, 7), caractérisé en ce que des moyens réglables (8) sont disposés dans les angles intérieurs (2A, 3A, 4A) du châssis (1A) en vue de maintenir au moins une lentille le long d'une extrémité plate du châssis (1A), les moyens de support réglables (8) comportant un arbre fileté (10) vissé dans un des éléments de châssis (2, 3, 4) et des moyens de maintien (11) supportés à l'extrémité supérieure de l'arbre et adaptés en vue de recevoir de manière fixe au moins une lentille, en ce que les moyens de maintien (11) comportent un écrou formant siège (12) vissé à l'extrémité supérieure dudit arbre, un écrou supérieur (14) auquel est assujetti au moins une desdites lentilles et un organe pivotant (13B) reliant ledit écrou supérieur audie écrou formant siège au moyen d'un système à rotule (12A, 13A, 14A, 13C).

2. Dispositif pour concentrer et recueillir les rayons solaires comprenant plusieurs ensembles suivant la revendication 1, disposés en rangées dans un plan (1).

3. Dispositif pour concentrer et recueillir les rayons solaires suivant la revendication 2, caractérisé en ce que la disposition en rangées dans un plan (1) présente la forme d'un polygone régulier.

4. Dispositif pour concentrer et recueillir les rayons solaires suivant la revendication 2, caractérisé en ce que ladite disposition en rangées (1) présente la forme d'un rayon de miel.

5. Dispositif pour concentrer et recueillir les rayons solaires suivant la revendication 4, caractérisé en ce que chacun de ces ensembles affecte une forme hexagonale.

6. Dispositif pour concentrer et recueillir les rayons solaires suivant l'une quelconque des revendications précédentes, caractérisé en ce que l'arbre a une partie filetée étagée (10B, 10C) à l'extrémité supérieure de laquelle est assujetti l'écrou formant siège.

## FIG. 1

## FIG. 2(a)

## FIG. 2(b)

## FIG. 2(c)

**FIG. 3(a)**

3A
3
3D
3A
3B
3B
3D
3B
3B

**FIG. 3(b)**

11
10C
11
10B
10
9
3A
3C
9
3B
10
8
10
9
9
3C
9
3B
8
10A

*FIG. 4*

*FIG. 5*

*FIG. 6*

*FIG. 7*

3